# EUROPÄISCHE PATENTSCHRIFT

(11) **EP 3 858 213 B1**
(45) Veröffentlichungstag und Bekanntmachung des Hinweises auf die Patenterteilung: **13.03.2024**
(21) Anmeldenummer: 21150356.0
(22) Anmeldetag: 06.01.2021
(51) Int. Cl.: A47L 15/42, D06F 39/00

(54) **WASSERFÜHRENDES HAUSHALTSGERÄT, INSBESONDERE GESCHIRRSPÜLMASCHINE**
WATER-CONVEYING HOUSEHOLD APPLIANCE, IN PARTICULAR DISHWASHERS
APPAREIL ÉLECTROMÉNAGER À CIRCULATION D'EAU, EN PARTICULIER LAVE-VAISSELLE

(30) Priorität: 16.01.2020 DE 102020100899
(43) Veröffentlichungstag der Anmeldung: 04.08.2021
(73) Patentinhaber: Miele & Cie. KG, 33332 Gütersloh (DE)
(72) Erfinder: Wolf, Cornelius, 33739 Bielefeld (DE); Steinmeier, Ralph, 32052 Herford (DE); Kornfeld, André, 33378 Rheda-Wiedenbrück (DE); Dahms, Tobias, 30519 Hannover (DE); Chluba, Nils, 31688 Nienstädt (DE); Bertram, Andre, 33609 Bielefeld (DE); Schröder, Nils, 33611 Bielefeld (DE)

(56) Entgegenhaltungen:
- EP-A1- 3 456 237
- DE-A1-102008 054 835
- DE-A1-102017 110 706

## Beschreibung

Die Erfindung betrifft ein wasserführendes Haushaltsgerät, insbesondere eine Geschirrspülmaschine, mit einem einen Spülraum bereitstellenden Spülbehälter zur Aufnahme von zu reinigendem Spülgut und einer Wärmepumpeneinrichtung, die einen Verdampfer, einen Verdichter, einen Verflüssiger, ein Expansionsorgan und einen diese Baukomponenten strömungstechnisch miteinander verbindenden Strömungskreislauf aufweist, wobei in dem Strömungskreislauf ein Arbeitsmedium geführt ist.

Wasserführende Haushaltsgeräte wie zum Beispiel Waschmaschinen, Haushaltsgeschirrspülmaschinen, Reinigungs- und/oder Desinfektionsautomaten und/oder dergleichen sind aus dem Stand der Technik an sich gut bekannt, weshalb es eines gesonderten druckschriftlichen Nachweises an dieser Stelle nicht bedarf. Es sei deshalb auch nur beispielhaft auf die EP 2 682 039 A1 verwiesen, die ein gattungsgemäßes Haushaltsgerät in Form einer Geschirrspülmaschine offenbart.

Die aus der EP 2 682 039 A1 vorbekannte Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sogenannten Spülflotte verfügt die Geschirrspülmaschine im Inneren des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die aus der EP 2 682 039 A1 vorbekannte Geschirrspülmaschine verfügt des Weiteren über eine Wärmepumpeneinrichtung, und zwar zu dem Zweck, den Energieverbrauch der Geschirrspülmaschine beim Aufheizen der Spülflotte zu reduzieren. Dies wird dadurch erreicht, dass mittels der Wärmepumpeneinrichtung ein erheblicher Wärmeanteil zur Spülflottenaufheizung aus der Umgebung in einen im bestimmungsgemäßen Verwendungsfall der Geschirrspülmaschine durchgeführten Spülprozess eingeleitet wird.

Die Wärmepumpeneinrichtung nach der EP 2 682 039 A1 verfügt in an sich bekannter Weise über einen Verdampfer, einen Verdichter, einen Verflüssiger, ein Expansionsorgan und einen diese Baukomponenten strömungstechnisch miteinander verbindenden Strömungskreislauf. Innerhalb des Strömungskreislaufs ist ein Arbeitsmedium, auch Kältemittel genannt, geführt. Im bestimmungsgemäßen Verwendungsfall der Wärmepumpeneinrichtung wird dem Arbeitsmedium mittels des Verflüssigers Wärme entzogen und auf die Spülflotte übertragen. Nach einem Durchströmen des Verflüssigers passiert das Arbeitsmedium das Expansionsorgan, infolge dessen das Arbeitsmedium auf ein niedrigeres Druckniveau gebracht wird. Da das Arbeitsmedium in diesem Zustand deutlich kälter als die Umgebungstemperatur ist, kann es im nachfolgenden Verdampfer Wärme aus der Umgebung aufnehmen, bevor es anschließend zum Verdichter und alsdann wieder zum Verflüssiger geführt wird.

Die Wärmepumpeneinrichtung der Geschirrspülmaschine nach der EP 2 682 039 A1 ist eine Luft-Wasser-Wärmepumpeneinrichtung. Im Bedarfsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsluft, sondern einem Flüssigkeitsreservoir Wärmeenergie entzogen. Als Flüssigkeitsreservoir kann beispielsweise ein mit Wasser befüllter Wassertank dienen, der den Verdampfer der Wärmepumpeneinrichtung beherbergt. Im Betriebsfall kommt es infolge eines Wärmeenergieentzugs zu einer Abkühlung des im Tank bevorrateten Wassers, wobei eine Abkühlung des Wassers bis zur Vereisung vorgenommen werden kann.

Im bestimmungsgemäßen Verwendungsfall einer gattungsgemäßen Geschirrspülmaschine wird ein Spülprozess durchlaufen, der eine Mehrzahl unterschiedlicher Spülschritte aufweist, die dem Säubern und Trocknen des Spülguts dienen. Hierzu gehören im Wesentlichen die aufeinander nachfolgenden Spülschritte des Vorspülens, des Reinigens, des Zwischenspülens, des Klarspülens und des Trocknens. Die Spülschritte des Reinigens und des Klarspülens umfassen jeweils Heizphasen, die dazu dienen, die im Spülraum befindliche Spülflotte auf ein bestimmtes Temperaturniveau anzuheben. Dies erfolgt unter bestimmungsgemäßer Verwendung der Wärmepumpeneinrichtung.

Da die Spülschritte des Reinigens und des Klarspülens nicht unmittelbar aufeinander nachfolgen, ist die Wärmepumpeneinrichtung nach einem Aufheizen der Spülflotte während des Reinigens abzuschalten und für ein Aufheizen der Spülflotte während des Klarspülens wieder anzuschalten. Im bestimmungsgemäßen Verwendungsfall der Geschirrspülmaschine wird die Wärmepumpeneinrichtung also nicht kontinuierlich betrieben, was in nachteiliger Weise zu einer ungewollten thermischen Belastung der Wärmepumpeneinrichtung führen kann. Diese thermische Belastung der Wärmepumpeneinrichtung kann dabei so weit gehen, dass die ordnungsgemäße Funktion der Wärmepumpeneinrichtung während des Durchlaufens eines Spülprozesses nicht sicher gewährleistet ist. Der eigentlich mit der Verwendung einer Wärmepumpeneinrichtung wünschenswerterweise zu erzielende Effekt der Energieeinsparung kann dann nicht mehr erreicht werden.

Die DE 10 2008 054 835 A1 offenbart einen Wäschetrockner, welcher eine Wärmepumpeneinrichtung aufweist, die einen Verdampfer, einen Verdichter, einen Verflüssiger, ein Expansionsorgan und einen diese Baukomponenten strömungstechnisch miteinander verbindenden Kühlmittelkreislauf aufweist, in dem ein Kühlmittel geführt ist. Um eine effektive Kühlung einer Steuereinrichtung des Wäschetrockners vorzusehen, ragt diese zumindest abschnittsweise in den Kühlmittelkreislauf hinein.

Die EP 3 456 237 A1 offenbart eine Geschirrspülmaschine, welcher ebenfalls eine Wärmepumpeneinrichtung aufweist, die einen Verdampfer, einen Verdichter, einen Verflüssiger, ein Expansionsorgan und einen diese Baukomponenten strömungstechnisch miteinander verbindenden Strömungskreislauf aufweist. Auf beiden Seiten des Verflüssigers ist dabei jeweils ein Ventil vorgesehen, um die im Wärmepumpenbetrieb herrschenden Temperatur- und Druckverhältnisse in einer ausgeschalteten Phase eine Zeit lang zu erhalten.

Die DE 10 2017 110 706 A1 einen Wärmepumpentrockner, welcher eine Wärmepumpeneinrichtung aufweist, die einen Verdampfer, einen Verdichter, einen Verflüssiger, eine Drosseleinrichtung und einen diese Baukomponenten strömungstechnisch miteinander verbindenden Strömungskreislauf aufweist. Außerdem ist eine Wärmeabfuhreinrichtung vorhanden, die in Kontakt mit der Drosseleinrichtung steht, um eine Wärmeabfuhr von der Drosseleinrichtung zu bewirken.

Es ist ausgehend vom Vorbeschriebenen die **Aufgabe** der Erfindung, ein wasserführendes Haushaltgerät, insbesondere eine Geschirrspülmaschine, der eingangs genannten Art dahingehend weiterzuentwickeln, dass konstruktiv eine sichere Funktionsweise der Wärmepumpeneinrichtung gewährleistet ist.

Zur **Lösung** dieser Aufgabe wird mit der Erfindung ein wasserführendes Haushaltgerät, insbesondere eine Geschirrspülmaschine, mit den Merkmalen von Anspruch 1 vorgeschlagen.

Die thermische Isolation des Expansionsorgans bewirkt, dass dieses bei einer bestimmungsgemäßen Verwendung der Wärmepumpeneinrichtung insoweit thermisch unbeeinflusst bleibt, als dass ein sicherer Betrieb der Wärmepumpeneinrichtung gestattet ist, und dies auch nach einem Zwischenstillstand, das heißt bei einem Wiedereinschalten der Wärmepumpeneinrichtung nach einem vorhergehenden Ausschalten. Es findet insbesondere kein zu starkes Auskühlen des Expansionsorgans nach einem Aufheizen im Spülschritt REINIGEN statt, so dass auch nach einem Abschalten der Wärmepumpeneinrichtung ein in einem nachfolgenden Spülschritt REINIGEN durchzuführendes Aufheizen der Spülflotte durch erneutes Einschalten der Wärmepumpeneinrichtung in bestimmungsgemäßer Weise unterstützt werden kann. Dabei sorgt die erfindungsgemäß vorgesehene thermische Isolierung des Expansionsorgans nicht nur dafür, ein zu starkes Auskühlen zu vermeiden, auch ein zu starkes Erwärmen wird hierdurch vermieden. Die thermische Isolierung kann auch als thermische Dämmung oder thermische Entkopplung verstanden oder bezeichnet werden, entscheidend ist, dass die Wärmeleitung vom Expansionsorgan zu anderen Komponenten des Haushaltsgeräts, insbesondere der Wärmepumpeneinrichtung reduziert wird. Die erfindungsgemäße Ausgestaltung stellt konstruktiv sicher, dass die Wärmepumpeneinrichtung weniger anfällig gegenüber auch im bestimmungsgemäßen Betriebsfall der Wärmepumpeneinrichtung nicht vermeidbaren thermischen Belastungen ist. Im Ergebnis wird so in vorteilhafter Weise eine verbesserte Funktionssicherheit erreicht.

Die thermische Isolation des Expansionsorgans erbringt zudem den Vorteil, dass dieses in seiner relativen Lage zu den übrigen Baukomponenten der Wärmepumpeneinrichtung freier positionierbar ist. Dies schafft konstruktive Freiheitsgrade, was insbesondere im Falle einer Geschirrspülmaschine von Vorteil ist, da hier der zur Aufnahme der Wärmepumpeneinrichtung vorgesehene Sockelbereich einen nur vergleichsweise kleinen Bauraum zur Aufnahme der Wärmepumpeneinrichtung zur Verfügung stellt. Durch die thermische Isolation des Expansionsorgans können Abstände zu anderen Baukomponenten verringert werden.

Gemäß einem weiteren Merkmal der Erfindung ist vorgesehen, dass eine vom Expansionsorgan zum Verdampfer führende erste Rohrleitung des Strömungskreislaufes ein erstes thermisches Isolationselement aufweist.

Der die einzelnen Baukomponenten der Wärmepumpeneinrichtung strömungstechnisch miteinander verbindende Strömungskreislauf verfügt über einzelne Rohrleitungen, die jeweils von Baukomponente zu Baukomponente führen. Eine erste Rohrleitung ist zwischen dem Expansionsorgan und dem Verdampfer angeordnet, so dass ein das Expansionsorgan in Strömungsrichtung verlassende Arbeitsmedium zum Verdampfer geleitet wird. Es ist nun vorgesehen, dass diese erste Rohrleitung zwischen Expansionsorgan und Verdampfer ein erstes thermisches Isolationselement aufweist. Damit ist eine thermische Entkopplung von Verdampfer und Expansionsorgan geschaffen, womit insbesondere ein Kälteeintrag ausgehend vom Verdampfer in das Expansionsorgan minimiert ist. Durch diese thermische Entkopplung wird also sichergestellt, dass eine nicht zu weite Abkühlung des Expansionsorgans im bestimmungsgemäßen Verwendungsfall der Wärmepumpeneinrichtung stattfindet.

Gemäß einer besonders bevorzugten Bauform ist vorgesehen, dass das erste Isolationselement als Rohrabschnitt der ersten Rohrleitung ausgebildet ist. Gemäß dieser Weiterbildung der Erfindung ist also vorgesehen, dass die Rohrleitung selbst zumindest abschnittsweise als erstes Isolationselement ausgebildet ist. Es ist so in konstruktiv denkbar einfacher Weise eine thermische Isolation bzw. thermische Entkopplung des Expansionsorgans gegeben.

Es ist gemäß einem weiteren Merkmal der Erfindung vorgesehen, dass die erste Rohrleitung aus einem ersten Material und das erste Isolationselement aus einem zweiten Material gebildet sind, wobei das zweite Material einen im Vergleich zum ersten Material geringeren Wärmeleitkoeffizienten aufweist. Eine Wärme- beziehungsweise Kältebrücke zwischen dem Expansionsorgan auf der einen Seite und dem Verdampfer auf der anderen Seite ist so konstruktiv unterbunden. Das zweite Material, das heißt das Material aus dem das erste Isolierelement gebildet ist, weist einen Wärmeleitkoeffizienten auf, der sehr viel geringer ist, als das Material, aus dem die erste Rohrleitung gebildet ist. Damit wirkt das Isolierelement als thermische Entkopplung, da von der ersten Rohrleitung transportierte Wärme aufgrund der Zwischenschaltung des ersten Isolationselements nur minimiert auf das Expansionsorgan übergehen kann.

Gemäß einem weiteren Merkmal der Erfindung ist vorgesehen, dass der Wärmeleitkoeffizient des zweiten Materials mindestens 4-mal, vorzugsweise mindestens 8-mal kleiner als der Wärmeleitkoeffizient des ersten Materials ist. Der Unterschied zwischen den (bzw. Verhältnis der) Wärmeleitkoeffizienten von erstem Material und zweitem Material weist mithin einen Faktor von mindestens 4, vorzugsweise mindestens 8 auf, insbesondere liegt der Faktor in einem Intervall von 4 bis 30, vorzugsweise in einem Intervall von 8 bis 25.

Bei dem ersten Material handelt es sich gemäß einem weiteren Merkmal der Erfindung vorzugsweise um Kupfer. Das zweite Material ist gemäß einem weiteren Merkmal der Erfindung bevorzugterweise Edelstahl, es kann aber auch Kunststoff sein.

Die Rohrleitungen eines Strömungskreislaufes einer aus dem Stand der Technik an sich vorbekannten Wärmepumpeneinrichtung bestehen typischerweise aus Kupfer. Dies insbesondere aus zwei Gründen. Zum einen kann Kupfer vergleichsweise einfach durch Löten verarbeitet werden und zum anderen lässt sich eine aus Kupfer gebildete Rohrleitung ohne Zerstörung derselben leicht biegen. Dies vereinfacht die Herstellung und Montage. Kupfer weist indes aber einen vergleichsweise hohen Wärmeleitkoeffizienten auf, so dass eine Wärmebrücke zwischen den strömungstechnisch benachbarten Baukomponenten der Wärmepumpeneinrichtung gegeben ist. Erfindungsgemäß ist nun vorgesehen, die Rohrleitung zwischen dem Expansionsorgan und dem Verdampfer zumindest abschnittsweise aus Edelstahl oder Kunststoff zu bilden. Hierdurch wird eine thermische Entkopplung geschaffen, wodurch die schon vorerläuterten Vorteile erreicht sind. Dabei erweist sich die zumindest abschnittsweise Ausbildung der ersten Rohrleitung aus Edelstahl oder Kunststoff als ebenfalls einfach in der Herstellung. Zudem wird eine spätere Montage beziehungsweise Demontage der Wärmepumpeneinrichtung hierdurch nicht nachteilig beeinflusst.

Mit der erfindungsgemäßen Konstruktion wird im Ergebnis eine in der Herstellung und Handhabung auf einfache Weise umsetzbare thermische Isolation des Expansionsorgans dadurch erreicht, dass zumindest ein Teil der ersten Rohrleitung nicht aus Kupfer, sondern aus Edelstahl oder Kunststoff gebildet ist. Da Edelstahl wie auch Kunststoff ein im Unterschied zu Kupfer sehr viel niedrigeren Wärmeleitkoeffizienten aufweist, stellt der aus Edelstahl oder Kunststoff gebildete Abschnitt der Rohrleitung ein Isolierelement dar, das einen Wärmefluss vom Verdampfer zum Expansionsorgan minimiert.

Gemäß einem weiteren Merkmal der Erfindung ist vorgesehen, dass das Expansionsorgan ein, insbesondere regelndes, Expansionsventil und einen damit zusammenwirkenden Thermofühler aufweist, wobei der Thermofühler an einer vom Verdampfer zum Verdichter führenden zweiten Rohrleitung des Strömungskreislaufes angeordnet ist. Gemäß dieser besonders bevorzugten Ausführungsform der Erfindung ist ein Expansionsventil vorgesehen, das dem Verdampfer strömungstechnisch vorgeschaltet ist. Die strömungstechnische Verbindung zwischen Expansionsventil und Verdampfer ist mittels der ersten Rohrleitung realisiert, die in schon vorbeschriebener Weise mit einem ersten Isolationselement ausgerüstet ist, wodurch die thermische Isolation des Expansionsventils erreicht ist.

Das Expansionsventil wirkt mit einem Thermofühler zusammen. Dieser ist dem Verdampfer strömungstechnisch nachgeschaltet. Es ist deshalb vorgesehen, den Thermofühler an einer vom Verdampfer zum Verdichter führenden zweiten Rohrleitung anzuordnen. Zu diesem Zweck wird der Thermofühler vorzugsweise außenseitig der zweiten Rohrleitung an der zweiten Rohrleitung angebracht.

Gemäß einem weiteren Merkmal der Erfindung ist vorgesehen, dass nicht nur das Expansionsventil, sondern auch der Thermofühler thermisch isoliert ist. Zu diesem Zweck ist vorgesehen, dass die zweite Rohrleitung ein zweites thermisches Isolationselement aufweist. Der Thermofühler ist in Strömungsrichtung des Arbeitsmediums dem Verdampfer nachgeschaltet, das heißt dem in Strömungsrichtung dem Verdampfer nachfolgenden Verdichter vorgeschaltet. Der Thermofühler ist des zweiten thermischen Isolationselements vom Verdichter thermisch entkoppelt, womit insbesondere ein Wärmeeintrag ausgehend vom Verdichter in den Thermofühler minimiert ist.

Die gleichzeitige thermische Isolation von Expansionsventil und Thermofühler erbringt eine noch weiter gesteigerte Funktionssicherheit der Wärmepumpeneinrichtung. Dabei dient das erste Isolationselement insbesondere dazu, einen Kälteeintrag ausgehend vom Verdampfer in das Expansionsventil zu minimieren, wohingegen das zweite Isolationselement dazu dient, einen Wärmeeintrag ausgehend vom Verdichter in den Thermofühler zu unterbinden. Das erste Isolationselement ist deshalb zwischen Expansionsventil und Verdampfer angeordnet, wohingegen das zweite Isolationselement zwischen Thermofühler und Verdichter angeordnet ist.

Das zweite Isolationselement kann ebenso wie das erste Isolationselement als Rohrabschnitt ausgebildet sein und zwar als Rohrabschnitt der zweiten Rohrleitung. Dabei besteht die zweite Rohrleitung aus einem ersten Material wie beispielsweise Kupfer und das zweite Isolationselement besteht aus einem zweiten Material, beispielsweise Edelstahl oder Kunststoff, womit das zweite Material einen im Vergleich zum ersten Material geringeren Wärmeleitkoeffizienten aufweist. Hinsichtlich des zweiten Isolationselements werden damit die schon vorstehend zum ersten Isolationselement aufgeführten Vorteile erreicht. Insbesondere ist vorgesehen, dass der Wärmeleitkoeffizient des zweiten Materials mindestens 4-mal, vorzugsweise mindestens 8-mal kleiner als der Wärmeleitkoeffizient des ersten Materials ist. Der Unterschied zwischen den (bzw. Verhältnis der) Wärmeleitkoeffizienten von erstem Material und zweitem Material weist mithin einen Faktor von mindestens 4, vorzugsweise mindestens 8 auf, insbesondere liegt der Faktor in einem Intervall von 4 bis 30, vorzugsweise in einem Intervall von 8 bis 25.

Weitere Merkmale und Vorteile der Erfindung ergeben sich aus der nachfolgenden Beschreibung anhand der Figuren. Dabei zeigen
- Fig. 1: in schematischer Darstellung ein erfindungsgemäßes wasserführendes Haushaltgerät in Form einer Geschirrspülmaschine;
- Fig. 2: in einer schematischen Darstellung ausschnittsweise eine erfindungsgemäße Wärmepumpeneinrichtung;
- Fig. 3: in schematischer Darstellung unterschiedliche Ausführungsformen einer Rohrleitung;
- Fig. 4: in schematischer Darstellung ausschnittsweise eine erfindungsgemäße Wärmepumpeneinrichtung;
- Fig. 5: in einer weiteren schematischen Darstellung ausschnittsweise eine erfindungsgemäße Wärmepumpeneinrichtung;
- Fig. 6: in schematischer Darstellung eine Geschirrspülmaschine nach dem Stand der Technik;
- Fig. 7: in schematischer Darstellung ein Expansionsorgan nach dem Stand der Technik und
- Fig. 8: in schematischer Darstellung ausschnittsweise eine Wärmepumpeneinrichtung nach dem Stand der Technik.

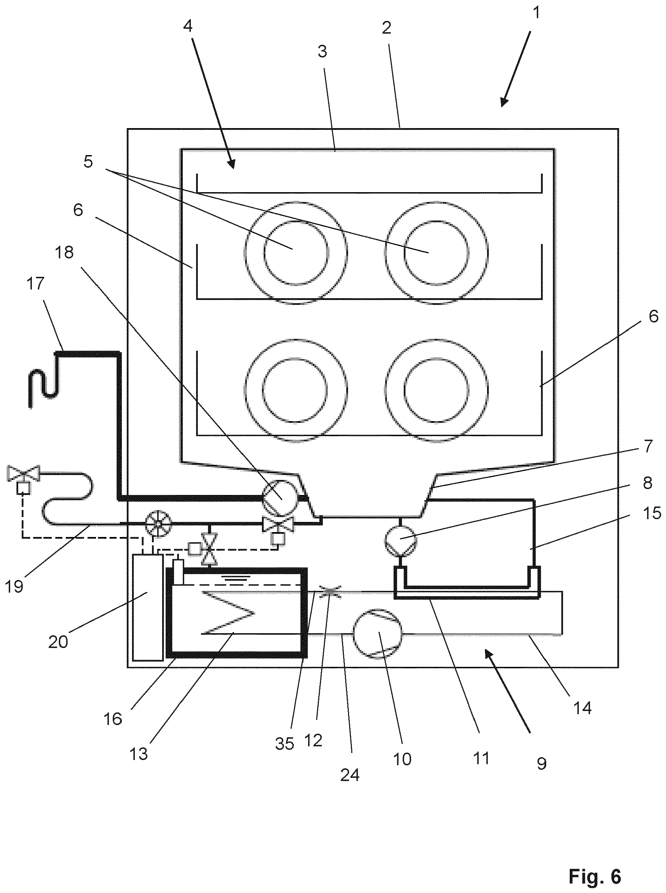

Figur 6 lässt in rein schematischer Darstellung eine Geschirrspülmaschine 1 erkennen, wie sie aus dem Stand der Technik bekannt ist, so zum Beispiel aus der EP 3 375 345 A1.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Geschirrspülmaschine 1 der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in der Figur ebenfalls nicht näher dargestellte Versorgungsleitungen ist die Sprüheinrichtung an die Umwälzpumpe 8 strömungstechnisch angeschlossen. Zudem ist der Sammeltopf 7 unter Zwischenschaltung einer Pumpe 18 an eine Abwasserleitung 17 und an eine Frischwasserleitung 19 strömungstechnisch angeschlossen.

Die Geschirrspülmaschine 1 verfügt des Weiteren über eine Wärmepumpeneinrichtung 9. Diese weist einen Verdichter 10, einen Verflüssiger 11, ein Expansionsorgan 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser als Wärmeträgermedium befüllt ist. Damit ist die Wärmepumpeneinrichtung 9 als sogenannte Wasser-Wasser-Wärmepumpeneinrichtung ausgebildet.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 umgewälzten Arbeitsmedium auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Arbeitsmediums frei werdende Wärmeenergie wird mithin auf die im Umwälzkreislauf 15 umgewälzte Spülflotte übertragen, zu welchem Zweck der Verflüssiger 11 über einen entsprechend ausgebildeten Wärmetauscher verfügt.

Des Weiteren ist noch eine Steuerung 20 vorgesehen, mittels welcher unter anderem die Füllstandshöhe des Wassers innerhalb des Tanks 16 sensiert und im Bedarfsfall eingestellt werden kann.

Wie die schematische Darstellung nach Figur 6 ferner erkennen lässt, verfügt der Strömungskreislauf 14 über eine Mehrzahl von Rohrleitungen, wobei zwischen zwei benachbarten Baukomponenten jeweils eine Rohrleitung angeordnet ist, mittels welcher diese beiden Baukomponenten strömungstechnisch miteinander verbunden sind. Und so ist in Strömungsrichtung des Arbeitsmediums zwischen dem Expansionsorgan 12 und dem Verdampfer 13 eine erste Rohrleitung 35 und zwischen dem Verdampfer 13 und dem Verdichter 10 eine zweite Rohrleitung 24 angeordnet.

Das in Figur 6 dargestellte Expansionsorgan 12 ist als ein einfaches, nicht regelndes Expansionsorgan ausgeführt, welches keiner weiteren Anbindung beispielsweise an die Rohrleitung 24, der sogenannten Sauggasleitung bedarf.

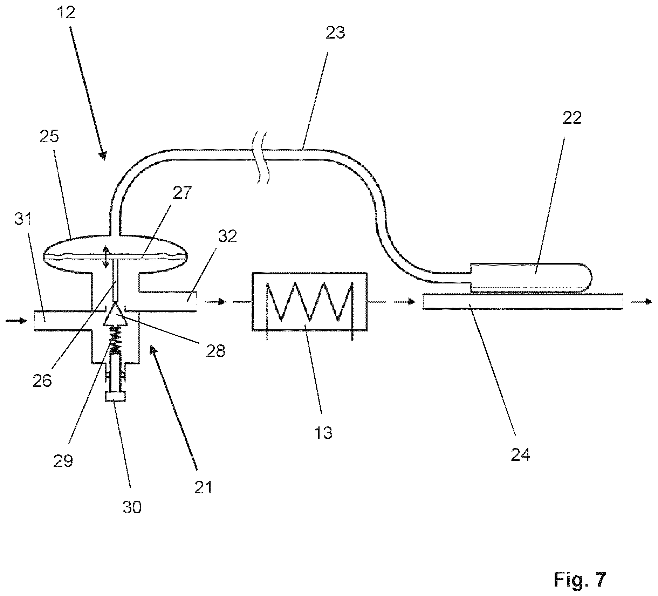

In der erfindungsgemäßen Geschirrspülmaschine wird dagegen ein Expansionsorgan 12 eingesetzt, welches als regelndes Expansionsorgan ausgeführt ist. Das Expansionsorgan 12 verfügt über ein Expansionsventil 21 und einen damit in Wirkverbindung stehenden Thermofühler 22. Dies lässt die schematische Darstellung nach Figur 7 erkennen.

Das Expansionsventil 21 ist dem Verdampfer 13 in Strömungsrichtung des Arbeitsmediums vorgeschaltet, wohingegen der Thermofühler 22 den Verdampfer 13 in Strömungsrichtung des Arbeitsmediums nachgeschaltet ist. Dabei ist der Thermofühler 22 wärmeleitend außenseitig an der zweiten Rohrleitung 24, der sogenannten Sauggasleitung angebracht.

Das Expansionsventil 21 verfügt über einen Thermokopf 25, der eine bewegliche Membran 27 beherbergt. Die Membran 27 kann in Entsprechung des in Figur 7 eingezeichneten Doppelpfeils verfahren.

Die Funktionsweise des Expansionsorgans 12 stellt sich wie folgt dar.

Anhand der beweglichen Membran 27 im Thermokopf 25 vergleicht das Expansionsorgan 12 den Druck des Arbeitsmediums in Strömungsrichtung vor dem Verdampfer 13 mit der in einen Gegendruck umgewandelten Sauggas-Temperatur an der Sauggasleitung 24 in Strömungsrichtung hinter dem Verdampfer 13. Hierfür wird die Temperatur des überhitzten Sauggases erfasst, indem der Thermofühler 22 wärmeleitend an der Sauggasleitung 24 angebracht ist.

In dem Thermofühler 22 befindet sich ebenfalls ein Arbeitsmedium, die sogenannte Fühlerfüllung, wodurch bei Temperaturänderung in der Sauggasleitung 24 die Fühlerfüllung verdampft beziehungsweise kondensiert und ein unterschiedlicher Druck in dem Thermofühler 22 aufgebaut wird. Dieser Druck wird über eine Kapillar 23 in den Thermokopf 25 des Expansionsventils 21 übertragen, wo er auf die Membran 27 einwirkt. Somit wirkt an der Membran 27 auf der einen Seite der Druck aus dem Thermofühler 22 und auf der anderen Seite der Verdampfungsdruck.

Zusätzlich wirkt auf der Seite des Verdampfungsdrucks eine mechanische Druckfeder 29, und zwar unter Zwischenschaltung eines Stößels 26 und eines Ventilkegels 28. Mittels einer Stellschraube 30 wird die Druckfeder 29 vorgespannt, wodurch indirekt ein Sollwert für die Höhe der Überhitzung des Arbeitsmediums eingestellt wird. Aufgrund der unterschiedlichen Drucklagen im Thermokopf 25 wird die Membran 27 während einer bestimmungsgemäßen Verwendung der Wärmepumpeneinrichtung 9 bewegt und über diese Auslenkung wird das Expansionsventil 21 mittels des Ventilkegels 28 auf- und zugefahren. Damit regelt das Expansionsorgan 12 den Fluss des Arbeitsmediums im Strömungskreislauf 14 und damit die Wärmepumpeneinrichtung 9.

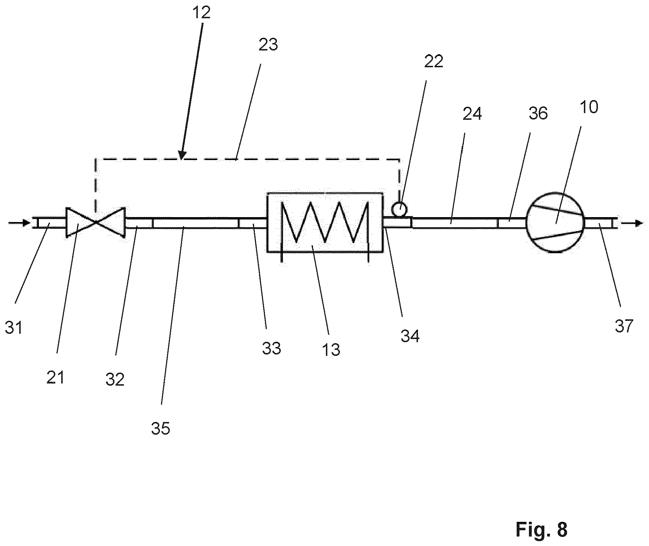

Figur 8 lässt in einer weiteren schematischen Darstellung ausschnittsweise die Wärmepumpeneinrichtung 9 erkennen. Wie sich aus dieser Darstellung ergibt, verfügt das Expansionsorgan 12 über ein Expansionsventil 21 und über einen Thermofühler 22, der mittels einer Kapillare 23 mit dem Expansionsventil 21 in Wirkverbindung steht.

Das Expansionsventil 21 verfügt eingangsseitig über einen Rohranschluss 31 und ausgangsseitig über einen Rohranschluss 32. In Strömungsrichtung des Arbeitsmediums ist dem Expansionsventil 21 der Verdampfer 13 nachgeschaltet. Dieser verfügt über einen Eingangsanschluss 33 und einen Ausgangsanschluss 34. Zur strömungstechnischen Verbindung von Expansionsventil 21 und Verdampfer 13 dient eine erste Rohrleitung 35, die den Rohranschluss 32 des Expansionsventils 21 mit dem Eingangsanschluss 33 des Verdampfers 13 koppelt.

Dem Verdampfer 13 ist in Durchströmungsrichtung des Arbeitsmediums der Verdichter 10 nachgeschaltet. Dieser verfügt über einen Verdichtereingangsanschluss 36 und einen Verdichterausgangsanschluss 37. Zur strömungstechnischen Verbindung von Verdampfer 13 und Verdichter 10 dient die zweite Rohrleitung 24, die den Ausgangsanschluss 34 des Verdampfers 13 strömungstechnisch mit dem Verdichtereingangsanschluss 36 verbindet.

Bei der vorbeschriebenen Konstruktion besteht allerdings das Problem der Arbeitsmediumverlagerung innerhalb des thermostatischen Expansionsorgans 12 während eines Stillstands der Wärmepumpeneinrichtung 9, wie dieser bestimmungsgemäß zwischen den Heizphasen der Spülschritte Reinigen und Klarspülen eines Spülprozesses auftritt. Hierdurch ergibt sich in nachteiliger Weise, dass bei einem Wiedereinschalten der Wärmepumpeneinrichtung 9 das Expansionsventil 21 aufgrund einer thermischen Belastung nicht mehr zuverlässig regeln kann, womit die gesamte Wärmepumpeneinrichtung 9 nicht mehr korrekt beziehungsweise ineffizient arbeitet.

Die Arbeitsmediumverlagerung im Expansionsorgan 12 ist wie folgt begründet. Das Arbeitsmedium im Expansionsorgan 12, das heißt im Thermofühler 22 ist, zumindest nahezu, identisch zu dem Arbeitsmedium, das im Strömungskreislauf 14 der Wärmepumpeneinrichtung 9 geführt ist. Dabei stellen sowohl das Expansionsorgan 12 als auch der Strömungskreislauf 14 für das jeweilige Arbeitsmedium ein geschlossenes System dar.

Grundsätzlich gilt, dass das Arbeitsmedium bei Temperaturdifferenzen in einem geschlossenen System immer am kältesten Punkt kondensiert. Wird nun die Wärmepumpeneinrichtung 9 nach einer bestimmungsgemäßen Verwendung in den Stillstand versetzt, so bildet der Ventilkörper 28 des Expansionsventils 21 die kälteste Stelle im Expansionsorgan 12 mit der Folge aus, dass hier das Arbeitsmedium kondensiert, womit dem Thermofühler 22 das Arbeitsmedium entzogen ist. Wird nun nach einem solchen Stillstand die Wärmepumpeneinrichtung 9 wieder eingeschaltet, kann über den Thermofühler 22 mangels dort vorhandenem Arbeitsmedium kein Druck an der Membran 27 im Thermokopf 25 aufgebaut werden. Das Expansionsventil 21 kann infolge dieses Umstandes nicht regeln, womit die ganze Funktionsweise der Wärmepumpeneinrichtung 9 gestört ist. Bei der Verwendung eines sogenannten MOP-Ventils als Expansionsventils 21 (MOP = Maximum Operation Pressure) verstärkt sich dieser Effekt noch, da bei einem derartigen Ventil die gesamte Fühlerfüllung auf ein Minimum begrenzt ist.

Die vorerläuterte Problematik betrifft insbesondere in Geschirrspülmaschinen 1 verbaute Wasser-Wasser-Wärmepumpeneinrichtungen 9. Dies deshalb, weil der von einem Sockelbereich einer Geschirrspülmaschine 1 zur Verfügung gestellte Bauraum zur Aufnahme der Wärmepumpeneinrichtung 9 nur sehr gering ausfällt, so dass es nicht zu vermeiden ist, dass der Latentwärmespeicher, das heißt der mit Wasser befüllte Tank 16 dem thermostatischen Expansionsventil 21 räumlich nahe nebengeordnet ist. Ein ungewollter Kälteeintrag aus dem Verdampfer 13 in das Expansionsorgan 12 ist deshalb nicht zu vermeiden. Hinzu kommt, dass das Problem der Arbeitsmittelverlagerung ohnehin nur dann auftritt, wenn die Wärmepumpeneinrichtung 9 nicht kontinuierlich, sondern mit Stillstandzeiten betrieben wird, was gerade bei einer bestimmungsgemäßen Verwendung einer Geschirrspülmaschine 1 typisch ist, denn die Wärmepumpeneinrichtung 9 wird nur für ein Aufheizen der Spülflotte während des Prozessschrittes des Reinigens einerseits und während des Prozessschrittes des Klarspülens andererseits betrieben. Zwischen diesen beiden Aufheizphasen wird die Wärmepumpeneinrichtung 9 ausgeschaltet, womit sich eine kurze Stillstandphase ergibt. Während dieser Stillstandphase stellen sich die vorbeschriebenen thermischen Wechselwirkungen zwischen den einzelnen Baukomponenten der Wärmepumpeneinrichtung 9 mit dem Ergebnis ein, dass es zu einer ungewollten Arbeitsmittelverlagerung im Expansionsorgan 12 kommt.

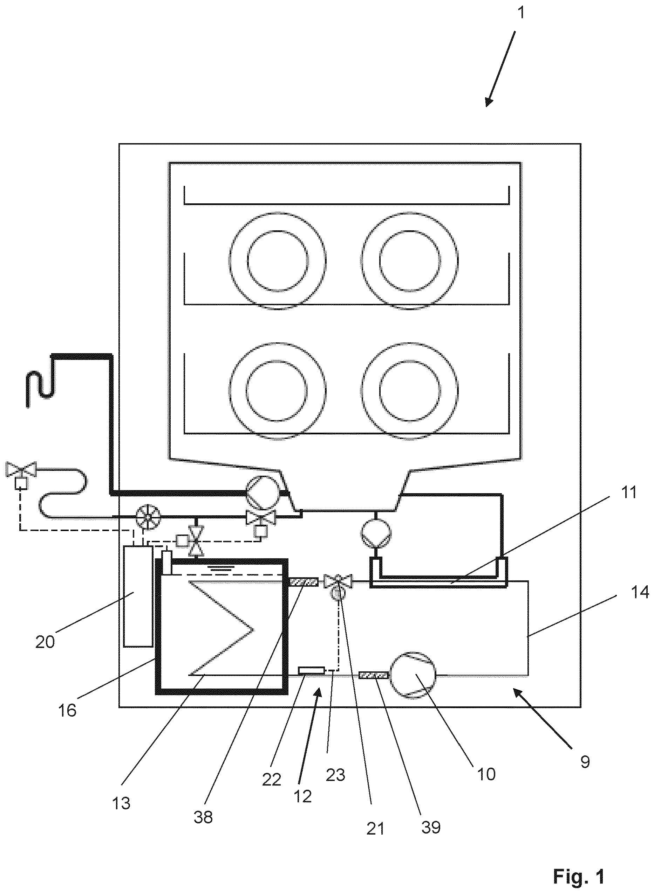

Die erfindungsgemäße Ausgestaltung eines wasserführenden Haushaltgeräts, wie sie in den Figuren 1 bis 5 gezeigt ist, schafft hier Abhilfe.

Figur 1 lässt in schematischer Darstellung eine Geschirrspülmaschine 1 als Beispiel für ein erfindungsgemäßes wasserführendes Haushaltgerät erkennen. Wie sich aus dieser Darstellung ergibt, ist das ein Expansionsventil 21 und einen Thermofühler 22 aufweisende Expansionsorgan 12 thermisch isoliert ausgebildet. Dies ist dadurch erreicht, dass die vom Expansionsventil 21 zum Verdampfer 13 führende erste Rohrleitung 35 ein erstes thermisches Isolationselement 38 aufweist. Auf diese Weise ist eine thermische Entkopplung von Expansionsventil 21 und Verdampfer 13 gegeben.

Des Weiteren ist vorgesehen, dass die vom Verdampfer 13 zum Verdichter 10 führende zweite Rohrleitung 24 ein zweites thermisches Isolationselement 39 aufweist. Hierdurch ist eine thermische Entkopplung des Thermofühlers 22 vom Verdichter 10 gegeben.

Das erste thermische Isolationselement 38 sorgt dafür, dass ein Kälteeintrag vom Verdampfer 13 auf das Expansionsventil 21 minimiert ist. Die ansonsten durch die erste Rohrleitung 35 gegebene Kältebrücke zwischen Verdampfer 13 und Expansionsventil 21 ist Dank des ersten Isolationselements 38 unterbrochen.

Mittels des zweiten Isolationselements 39 wird ein Wärmeübertrag vom Verdichter 10 auf den Thermofühler 22 minimiert. Insofern dient das zweite Isolationselement 39 dazu, die ansonsten bestehende Wärmebrücke zwischen Verdichter 10 und Thermofühler 22 zu unterbrechen.

Im Ergebnis der erfindungsgemäßen Ausgestaltung steht, dass das Expansionsventil 21 vor dem Verdampfer 13 kältegeschützt und der Thermofühler 12 vor dem Verdichter 10 wärmegeschützt ist. Hierdurch wird die vorbeschriebene Problematik der Arbeitsmittelverlagerung vermieden, und dies auch bei einem Betrieb der Wärmepumpeneinrichtung 9 mit einer Stillstandphase, wie dies bei einer bestimmungsgemäßen Verwendung einer Geschirrspülmaschine 1 typisch ist.

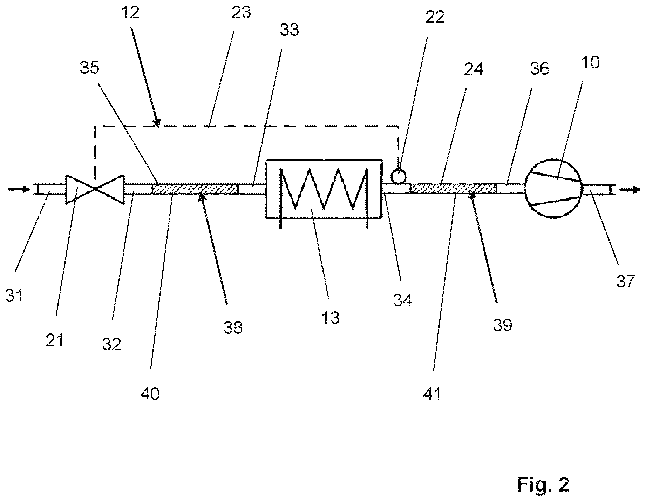

Eine besondere Ausführungsform der Erfindung ist in Figur 2 dargestellt.

Wie Figur 2 erkennen lässt, sind sowohl das erste Isolationselement 38 als auch das zweite Isolationselement 39 jeweils als Rohrabschnitt 40 beziehungsweise 41 der ersten Rohrleitung 35 beziehungsweise der zweiten Rohrleitung 24 ausgebildet. Demnach ist also vorgesehen, das jeweilige Isolationselement 38 beziehungsweise 39 dadurch auszubilden, dass die jeweilige Rohrleitung 35 beziehungsweise 24 jeweils zumindest abschnittsweise wärme- beziehungsweise kälteisolierend ausgebildet ist. Dies ist gemäß einem besonderen Vorschlag der Erfindung dadurch erreicht, dass die an sich aus Kupfer gebildeten Rohrleitungen 35 beziehungsweise 24 zumindest abschnittsweise nicht aus Kupfer, sondern aus einem anderen Material gebildet sind. Dabei weist dieses andere Material einen Wärmeleitkoeffizienten auf, der deutlich geringer ist, als der von Kupfer. Bevorzugt ist indes die Verwendung von Edelstahl.

Gemäß der bevorzugten Ausführungsform der Erfindung ist demnach vorgesehen, die erste Rohrleitung 35 und die zweite Rohrleitung 24 zumindest abschnittsweise nicht aus Kupfer, sondern aus Edelstahl zu bilden. Anstelle von Edelstahl kann auch ein anderes Material mit einem vergleichsweise niedrigen Wärmeleitkoeffizienten verwendet werden, beispielsweise Kunststoff. Auch müssen die Rohrleitungen des Strömungskreislaufes 14 nicht aus Kupfer bestehen. Aluminium ist gleichfalls denkbar. Von erfindungswesentlicher Bedeutung ist allein, dass die erste Rohrleitung 35 und die zweite Rohrleitung 24 zumindest abschnittsweise aus einem Material gebildet ist, das einen geringeren Wärmeleitkoeffizient aufweist, als das Material, aus dem die übrige Rohrleitung gebildet ist, so dass eine thermische Entkopplung gegeben ist.

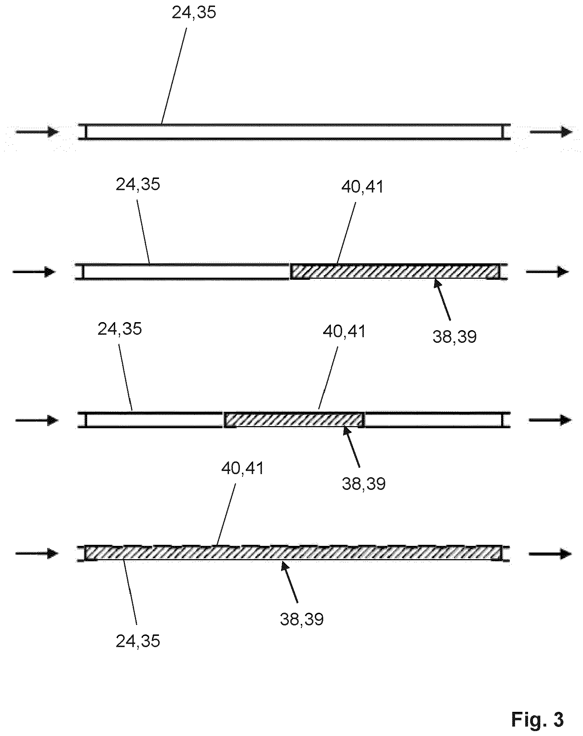

Die Rohrleitung 35 beziehungsweise 24 kann auch vollständig aus einem Material mit vergleichsweise niedrigem Wärmeleitkoeffizient gebildet sein. Es sind auch Mischformen in beliebiger Weise denkbar, wie dies Figur 3 schematisch erkennen lässt.

Figur 3 zeigt vier Rohrleitungen 24 beziehungsweise 35. Die in Figur 3 zu oberst dargestellte Rohrleitung 34 beziehungsweise 35 besteht vollständig aus Kupfer. Dies entspricht einer Ausgestaltung nach dem Stand der Technik.

Die in Figur 3 zweite Rohrleitung von oben ist abschnittsweise aus Edelstahl gebildet, was durch die eingezeichnete Schraffur dargestellt ist. Dieser aus Edelstahl gebildete Abschnitt der Rohrleitung 24 beziehungsweise 35 bildet das Isolationselement 38 beziehungsweise 39.

Die nach Figur 3 dritte Rohrleitung von oben verfügt gleichfalls über einen Rohrabschnitt 40 beziehungsweise 41, der aus Edelstahl gebildet ist. Im Unterschied zur vorerläuterten Ausführungsform ist dieser Abschnitt nicht endseitig des Rohres 24 beziehungsweise 35 ausgebildet, sondern mittig.

Die in Figur 3 letzte Ausführungsform zeigt schließlich eine Rohrleitung 24 beziehungsweise 35, die vollständig aus Edelstahl gebildet ist. In diesem Fall stimmen die Rohrabschnitte 40 und 41 mit der Rohrleitung 24 beziehungsweise 35 überein.

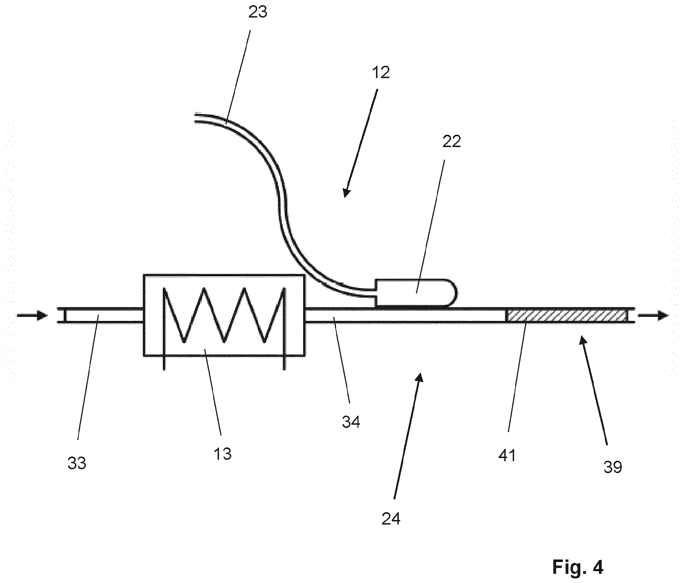

Figur 4 lässt in schematischer Darstellung die Anordnung des Thermofühlers 22 gemäß der erfindungsgemäßen Ausbildung erkennen. Der Thermofühler 22 ist wärmeleitend an der zweiten Rohrleitung 24 anzubringen. Ansonsten ist eine bestimmungsgemäße Verwendung des Expansionsorgans 12 nicht sichergestellt. Erfindungsgemäß ist deshalb vorgesehen, den Ausgangsanschluss 34 des Verdampfers 13 so auszugestalten, dass dieser hinreichend Bauraum zur bestimmungsgemäßen Anordnung des Thermofühlers 22 bereitstellt. An den Ausgangsanschluss 34 schließt sich dann in schon vorbeschriebener Weise die zweite Rohrleitung 24 an, die in diesem Fall vollständig aus Edelstahl gebildet sein kann.

Alternativ ist die zweite Rohrleitung 34 aus zwei Abschnitten gebildet, wobei der erste Abschnitt aus Kupfer und der zweite Abschnitt aus Edelstahl gebildet sind. In diesem Fall ist dann der Thermofühler 22 am ersten aus Kupfer gebildeten Rohrabschnitt der zweiten Rohrleitung 24 wärmeleitend angeordnet.

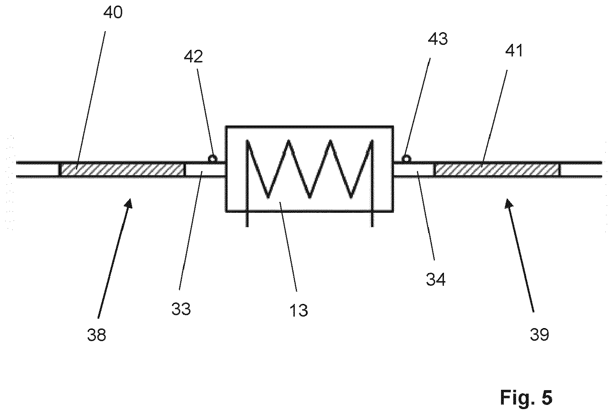

Figur 5 lässt schließlich noch eine Ausführungsform erkennen, dergemäß der Eingangsanschluss 33 und der Ausgangsanschluss 34 des Verdampfers 13 jeweils mit einem Temperaturfühler 42 beziehungsweise 43 ausgerüstet sind. Aufgrund der erfindungsgemäß vorgesehenen thermischen Entkopplung ist eine sehr präzise Temperaturmessung an den Verdampferanschlüssen mittels der dafür vorgesehenen Temperaturfühlern 42 oder 43 möglich, um beispielsweise einen Wärmepumpenprozess zu überwachen oder um Rückschlüsse auf die Wassertemperatur des Wassers im Tank 16 während Stillstandphasen der Wärmepumpeneinrichtung zu erhalten. Denn Dank der thermischen Entkopplung sind die Verdampferanschlüsse 33 und 34 weniger stark durch weitere Baukomponenten der Wärmepumpeneinrichtung 9 thermisch beeinflusst.

Die Eigenschaft der Dank thermischer Entkopplung genaueren Temperaturmessung am Verdampfereinlass und -auslass mittels der Temperaturfühler 32 und 43 macht auch dann Sinn, wenn ein elektronisches Expansionsventil 21 verwendet werden soll, da hierfür eine möglichst genaue Messung der Überhitzungstemperatur erforderlich ist.

Ein elektronisches Expansionsventil benötigt als Eingangsgrößen für die Regelung entweder die Verdampferaustrittstemperatur und den Verdampferaustrittsdruck oder die Verdampfereintritts- und Verdampferaustrittstemperatur. Um im letzteren Fall die Regelung nur über Temperatursensoren zu optimieren, sollte die Tanktemperatur als jeweiliger Startwert für die Wärmepumpeneinrichtung verwertet werden und zudem die Spülflottentemperatur oder Verflüssigerein- oder -austrittstemperatur in eine Steuereinheit der Regelung einfließen, um Rückschluss auf den im Verdampfer stattfindenden Druckverlust zu erhalten und die nötige Stellgröße der Überhitzungsregelung in Abhängigkeit des Systemzustandes anzupassen.

Eine besonders bevorzugte Variante beim Einsatz eines elektronischen Expansionsventils ist daher die thermische Entkopplung auf der Saugseite zwischen Verdampferaustritt und Verdichter. Dadurch kann sogar mit nur einem Temperaturfühler im Betrieb die Verdampferaustrittstemperatur für die Überhitzungsregelung und in den Stillstandzeiten die Tanktemperatur gemessen werden. Bei allen anderen Systemen ist immer ein zusätzlicher Temperaturfühler allein zur Tanksensierung erforderlich. Eine Entkopplung auf der Verdampfereingangsseite ist gemäß dieser Variante dem Grunde nach überflüssig, da das Expansionsventil über einen Motor elektrisch auf- und zugefahren wird und ein Herunterkühlen während der Stillstandzeiten im Gegensatz zu einem thermostatischen Expansionsventil keine besondere Problematik darstellt.

Besonders vorteilhaft für eine thermische Entkopplung ist der Einsatz eines Edelstahlwellschlauches in der Sauggasleitung zum Verdichter. Ein solcher Edelstahlwellschlauch hat den Vorteil, unterschiedliche Schwingungen aufnehmen zu können, was gerade bei drehzahlgeregelten Verdichtern von Vorteil ist.

Ein beidseitig thermisches Entkoppeln hat zudem bei einem vollständig gedämmten Tank 16 den Vorteil, dass es zu deutlich geringeren Schwitzwasseraufkommen an den Rohrleitungen kommt. An den kalten Rohrleitungen kondensiert üblicherweise viel Wasser aus der Umgebungsluftfeuchtigkeit, welches gegebenenfalls auch nach und nach in die Auffangschale einer Geschirrspülmaschine 1 tropft und sich dort ansammelt. Durch die thermische Entkopplung kann dieser Effekt verringert werden, gegebenenfalls kann dadurch auch auf eine Schwitzwasserdämmung der Rohrleitungen verzichtet werden.

Im Ergebnis können infolge der erfindungsgemäßen Ausgestaltung der thermischen Entkopplung folgende Vorteile erreicht werden:
- Kein starkes Auskühlen des thermostatischen Expansionsventils 12 beziehungsweise kein starkes Aufwärmen des Thermofühlers 22, womit die Funktionssicherheit der Wärmepumpeneinrichtung 9 auch nach einer bestimmungsgemäßen Stillstandzeit erhöht ist.
- Der Thermofühler 22 ist in seiner geometrischen Lage freier positionierbar, da die Wegstrecke zum Verdichter 10 verkürzt werden kann.
- Es sind kürzere Rohrlängen möglich, was für die Nutzung des ohnehin knappen Bauraums in der Geschirrspülmaschine 1 sehr bedeutsam ist.
- Es ist eine verbesserte Tank-Temperatursensierung für die Rohrleitungen beziehungsweise eine verbesserte Sensierung des Vereisungsgrades ermöglicht, da äußere Einflüsse beziehungsweise Störgrößen verringert sind.
- Bei einem elektronischen Expansionsventil ist nur ein Fühler für die Verdampferaustrittstemperatur der Überhitzungsregelung und Tanktemperatursensierung in Stillstandphasen notwendig.
- Es kann gegebenenfalls auf eine Schwitzwasserdämmung der Rohrleitungen verzichtet werden.

### Bezugszeichen

- 1: Geschirrspülmaschine
- 2: Gehäuse
- 3: Spülbehälter
- 4: Spülraum
- 5: Spülgut
- 6: Spülkorb
- 7: Sammeltopf
- 8: Umwälzpumpe
- 9: Wärmepumpeneinrichtung
- 10: Verdichter
- 11: Verflüssiger
- 12: Expansionsorgan
- 13: Verdampfer
- 14: Strömungskreislauf (der Wärmepumpeneinrichtung)
- 15: Umwälzkreislauf (Spülflotte)
- 16: Tank
- 17: Abwasserleitung
- 18: Pumpe
- 19: Frischwasserleitung
- 20: Steuerung
- 21: Expansionsventil
- 22: Thermofühler
- 23: Kapillare
- 24: zweite Rohrleitung (Sauggasleitung)
- 25: Thermokopf
- 26: Stößel
- 27: Membran
- 28: Ventilkegel
- 29: Druckfeder
- 30: Stellschraube
- 31: Eingangsrohranschluss
- 32: Ausgangsrohranschluss
- 33: Eingangsanschluss
- 34: Ausgangsanschluss
- 35: erste Rohrleitung
- 36: Verdichtereingangsanschluss
- 37: Verdichterausgangsanschluss
- 38: erstes Isolationselement
- 39: zweites Isolationselement
- 40: Rohrabschnitt
- 41: Rohrabschnitt
- 42: Temperaturfühler
- 43: Temperaturfühler

## Patentansprüche

1. Wasserführendes Haushaltsgerät, insbesondere Geschirrspülmaschine (1), mit einem einen Spülraum (4) bereitstellenden Spülbehälter (3) zur Aufnahme von zu reinigendem Spülgut (5) und einer Wärmepumpeneinrichtung (9), die einen Verdampfer (13), einen Verdichter (10), einen Verflüssiger (11), ein Expansionsorgan (12) und einen diese Baukomponenten (10, 11, 12, 13) strömungstechnisch miteinander verbindenden Strömungskreislauf (14) aufweist, wobei in dem Strömungskreislauf (14) ein Arbeitsmedium geführt ist,
wobei zur thermischen Isolierung des Expansionsorgans (12) eine vom Expansionsorgan (12) zum Verdampfer (13) führende erste Rohrleitung (35) des Strömungskreislaufes (14) ein erstes thermisches Isolationselement (38) aufweist,
wobei das erste Isolationselement (38) als Rohrabschnitt (40) der ersten Rohrleitung (35) ausgebildet ist
oder
wobei die erste Rohrleitung (35) aus einem ersten Material und das erste Isolationselement (38) aus einem zweiten Material gebildet sind, wobei das zweite Material einen im Vergleich zum ersten Material geringeren Wärmeleitkoeffizienten aufweist.

2. Wasserführendes Haushaltsgerät nach Anspruch 1, **dadurch gekennzeichnet, dass** der Wärmeleitkoeffizient des zweiten Materials mindestens 4-mal kleiner, vorzugsweise mindestens 8-mal kleiner, insbesondere 8 bis 25-mal kleiner als der Wärmeleitkoeffizient des ersten Materials ist.

3. Wasserführendes Haushaltsgerät nach Anspruch 1 oder 2, **dadurch gekennzeichnet, dass** das erste Material Kupfer oder Aluminium ist.

4. Wasserführendes Haushaltsgerät nach einem der vorhergehenden Ansprüche,
**dadurch gekennzeichnet, dass** das zweite Material Edelstahl oder Kunststoff ist.

5. Wasserführendes Haushaltsgerät nach einem der vorhergehenden Ansprüche,
**dadurch gekennzeichnet, dass** das Expansionsorgan (12) ein Expansionsventil (21) und einen damit zusammenwirkenden Thermofühler (22) aufweist, wobei der Thermofühler (22) an einer vom Verdampfer (13) zum Verdichter (10) führenden zweiten Rohrleitung (24) des Strömungskreislaufes (14) angeordnet ist.

6. Wasserführendes Haushaltsgerät nach Anspruch 5, **dadurch gekennzeichnet, dass** der Thermofühler (22) thermisch isoliert ist.

7. Wasserführendes Haushaltsgerät nach Anspruch 5 oder 6, **dadurch gekennzeichnet, dass** die zweite Rohrleitung (24) ein zweites thermisches Isolationselement (39) aufweist.

8. Wasserführendes Haushaltsgerät nach Anspruch 7, **dadurch gekennzeichnet, dass** das zweite Isolationselement (39) als Rohrabschnitt (41) der zweiten Rohrleitung (24) ausgebildet ist.

9. Wasserführendes Haushaltsgerät nach Anspruch 7 oder 8, **dadurch gekennzeichnet, dass** die zweite Rohrleitung (24) aus einem ersten Material und das zweite Isolationselement (39) aus einem zweiten Material gebildet sind, wobei das zweite Material einen im Vergleich zum ersten Material geringeren Wärmeleitkoeffizienten aufweist.

10. Wasserführendes Haushaltsgerät nach Anspruch 9, **dadurch gekennzeichnet, dass** der Wärmeleitkoeffizient des zweiten Materials mindestens 4-mal kleiner, vorzugsweise mindestens 8-mal, insbesondere 8 bis 25-mal kleiner als der Wärmeleitkoeffizient des ersten Materials ist.

11. Wasserführendes Haushaltsgerät nach Anspruch 9 oder 10, **dadurch gekennzeichnet, dass** das erste Material Kupfer oder Aluminium ist.

12. Wasserführendes Haushaltsgerät nach einem der vorhergehenden Ansprüche 9 bis 11, **dadurch gekennzeichnet, dass** das zweite Material Edelstahl oder Kunststoff ist.

## Claims

1. Water-conducting household appliance, in particular a dishwasher (1), comprising a washing container (3) which is intended for receiving washware (5) to be cleaned and which provides a washing chamber (4), and comprising a heat pump device (9) which has an evaporator (13), a compressor (10), a condenser (11), an expansion element (12) and a flow circuit (14) which fluidically connects said components (10, 11, 12, 13) to one another,
wherein a working medium is guided in the flow circuit (14),
wherein, for thermal insulation of the expansion element (12), a first pipeline (35) of the flow circuit (14), which pipeline leads from the expansion element (12) to the evaporator (13), has a first thermal insulation member (38),
wherein the first insulation member (38) is designed as a pipe portion (40) of the first pipeline (35)
or
wherein the first pipeline (35) is formed of a first material and the first insulation member (38) is formed of a second material, wherein the second material has a lower thermal conductivity coefficient compared to the first material.

2. Water-conducting household appliance according to claim 1,
**characterised in that** the thermal conductivity coefficient of the second material is at least 4 times smaller, preferably at least 8 times smaller, in particular 8 to 25 times smaller than the thermal conductivity coefficient of the first material.

3. Water-conducting household appliance according to claim 1 or 2, **characterised in that** that the first material is copper or aluminium.

4. Water-conducting household appliance according to any of the preceding claims, **characterised in that** the second material is stainless steel or plastics material.

5. Water-conducting household appliance according to any of the preceding claims, **characterised in that** the expansion element (12) has an expansion valve (21) and a thermal sensor (22) which interacts with it, the thermal sensor (22) being arranged on a second pipeline (24) of the flow circuit (14), which pipeline leads from the evaporator (13) to the compressor (10).

6. Water-conducting household appliance according to claim 5,
**characterised in that** the thermal sensor (22) is thermally insulated.

7. Water-conducting household appliance according to claim 5 or 6,
**characterised in that** the second pipeline (24) has a second thermal insulation member (39).

8. Water-conducting household appliance according to claim 7,
**characterised in that** the second insulation member (39) is designed as a pipe portion (41) of the second pipeline (24).

9. Water-conducting household appliance according to claim 7 or 8,
**characterised in that** the second pipeline (24) is formed of a first material and the second insulation member (39) is formed of a second material, the second material having a lower thermal conductivity coefficient compared to the first material.

10. Water-conducting household appliance according to claim 9,
**characterised in that** the thermal conductivity coefficient of the second material is at least 4 times smaller, preferably at least 8 times, in particular 8 to 25 times smaller than the thermal conductivity coefficient of the first material.

11. Water-conducting household appliance according to claim 9 or 10,
**characterised in that** the first material is copper or aluminium.

12. Water-conducting household appliance according to any of the preceding claims 9 to 11, **characterised in that** the second material is stainless steel or plastics material.

## Revendications

1. Appareil électroménager à circulation d'eau, en particulier lavevaisselle (1), comportant un récipient de lavage (3) fournissant un espace de lavage (4) pour la réception d'articles à laver (5) et un dispositif de pompe à chaleur (9) qui présente un évaporateur (13), un compresseur (10), un condenseur (11), un organe d'expansion (12) et un circuit d'écoulement (14) reliant lesdits composants structuraux (10, 11, 12, 13) entre eux par communication fluidique,
dans lequel un milieu de travail est guidé dans le circuit d'écoulement (14),
dans lequel, pour l'isolation thermique de l'organe d'expansion (12), une première conduite tubulaire (35) du circuit d'écoulement (14), menant de l'organe d'expansion (12) à l'évaporateur (13), présente un premier élément d'isolation (38) thermique,
dans lequel le premier élément d'isolation (38) est réalisé sous la forme d'une section tubulaire (40) de la première conduite tubulaire (35)
ou
dans lequel la première conduite tubulaire (35) est formée d'un premier matériau et le premier élément d'isolation (38) est formé d'un second matériau, dans lequel le second matériau présente un coefficient de conductivité thermique inférieur par rapport à celui du premier matériau.

2. Appareil électroménager à circulation d'eau selon la revendication 1, **caractérisé en ce que** le coefficient de conductivité thermique du second matériau est au moins 4 fois plus petit, de préférence au moins 8 fois plus petit, en particulier 8 à 25 fois plus petit que le coefficient de conductivité thermique du premier matériau.

3. Appareil électroménager à circulation d'eau selon la revendication 1 ou 2, **caractérisé en ce que** le premier matériau est du cuivre ou de l'aluminium.

4. Appareil électroménager à circulation d'eau selon l'une des revendications précédentes, **caractérisé en ce que** le second matériau est de l'acier inoxydable ou du plastique.

5. Appareil électroménager à circulation d'eau selon l'une des revendications précédentes, **caractérisé en ce que** l'organe d'expansion (12) présente une soupape d'expansion (21) et une sonde thermique (22) coopérant avec celle-ci, dans lequel la sonde thermique (22) est disposée sur une seconde conduite tubulaire (24) du circuit d'écoulement (14) menant de l'évaporateur (13) au compresseur (10).

6. Appareil électroménager à circulation d'eau selon la revendication 5, **caractérisé en ce que** la sonde thermique (22) est isolée thermiquement.

7. Appareil électroménager à circulation d'eau selon la revendication 5 ou 6, **caractérisé en ce que** la seconde conduite tubulaire (24) présente un second élément d'isolation (39) thermique.

8. Appareil électroménager à circulation d'eau selon la revendication 7, **caractérisé en ce que** le second élément d'isolation (39) est réalisé sous la forme d'une section tubulaire (41) de la seconde conduite tubulaire (24).

9. Appareil électroménager à circulation d'eau selon la revendication 7 ou 8, **caractérisé en ce que** la seconde conduite tubulaire (24) est formée d'un premier matériau et le second élément d'isolation (39) est formé d'un second matériau, dans lequel le second matériau présente un coefficient de conductivité thermique inférieur par rapport à celui du premier matériau.

10. Appareil électroménager à circulation d'eau selon la revendication 9, **caractérisé en ce que** le coefficient de conductivité thermique du second matériau est au moins 4 fois plus petit, de préférence au moins 8 fois, en particulier 8 à 25 fois plus petit que le coefficient de conductivité thermique du premier matériau.

11. Appareil électroménager à circulation d'eau selon la revendication 9 ou 10, **caractérisé en ce que** le premier matériau est du cuivre ou de l'aluminium.

12. Appareil électroménager à circulation d'eau selon l'une des revendications précédentes 9 à 11, **caractérisé en ce que** le second matériau est de l'acier inoxydable ou du plastique.
